# EUROPEAN PATENT SPECIFICATION

(11) **EP 3 303 124 B1**
(45) Date of publication and mention of the grant of the patent: **03.06.2020**
(21) Application number: 16719938.9
(22) Date of filing: 18.04.2016
(51) Int. Cl.: B64C 39/02

(54) **ELECTRIC AIRCRAFT AND POWER SUPPLY DEVICE**
ELEKTRISCHES FLUGZEUG UND STROMVERSORGUNGSVORRICHTUNG
AÉRONEF ÉLECTRIQUE ET DISPOSITIF D'ALIMENTATION EN ÉNERGIE

(30) Priority: 28.05.2015 JP 2015108195
(43) Date of publication of application: 11.04.2018
(73) Proprietor: Murata Manufacturing Co., Ltd., Nagaokakyo-shi, Kyoto 617-8555 (JP)
(72) Inventor: SAKAI, Hirotaka, Koriyama-shi, Fukushima 963-0531 (JP); MORI, Yasushi, Koriyama-shi, Fukushima 963-0531 (JP); KUSUMI, Yasuyuki, Koriyama-shi, Fukushima 963-0531 (JP); MISAWA, Daiki, Koriyama-shi, Fukushima 963-0531 (JP)
(74) Representative: Witte, Weller & Partner Patentanwälte mbB
(86) International application number: PCT/JP2016/002073
(87) International publication number: WO 2016/189797

(56) References cited:
- WO-A1-2011/149544
- WO-A1-2013/105926
- WO-A2-2014/025444
- KR-B1- 100 661 618
- US-A1- 2008 114 505

## Description

### CROSS REFERENCE TO RELATED APPLICATIONS

This application claims priority to Japanese Priority Patent Application JP 2015-108195 filed May 28, 2015.

### Technical Field

The present disclosure relates to an electric aircraft.

### Background Art

Unmanned aircrafts, one of electric aircrafts of this type, are referred to, for example, as drones, and rotate their motors with battery modules including secondary batteries and battery control circuits to rotate their rotary wings with the motors. For example, PTL 1 describes an unmanned aircraft including rotary wings. Unmanned aircrafts in related art are, for example, toys and relatively light. More and more people today hope to transport heavy loads with unmanned aircrafts. PTL 2 discloses an unmanned vehicle including a body forming a battery module, a control module and one or more propulsion modules. The battery module provides a battery capacity adequate to provide motive force for the vehicle over the range of missions. The battery module has a plurality of structural and electronic connection ports for connecting other components. The control module includes a control system configured to control the operation of the vehicle, and is directly and removably connected to the battery module via a first connection port of the plurality of connection ports. The propulsion modules each include a motor configured to provide propulsive force to move the vehicle through one or more missions of the range of missions, and are directly and removably connected to the battery module via additional connection ports of the plurality of connection ports. PTL3 discloses a rotary wing vehicle including a body structure having an elongated tubular backbone or core, and a counterrotating coaxial rotor system having rotors with each rotor having a separate motor to drive the rotors about a common rotor axis of rotation, wherein the rotor system is used to move the rotary wing vehicle in directional flight.

### Citation List

### Patent Literature

PTL 1: JP 2010-120641A
PTL 2: WO 2011/149544A1
PTL 3: WO 2014/025444 A2

### Summary

### Technical Problem

A power shortage and balance during flight are issues for transportation of heavy loads. A power shortage limits the flight time and weight of a load to be transported, and that is why commercial unmanned aircrafts have not unfortunately gained widespread use. To overcome the power shortage, a battery module having high output is used. For example, as many as a hundred or more cylindrical lithium-ion secondary batteries are used to generate much power. Furthermore, unmanned aircrafts are extremely difficult to balance in the air and easy to unbalance, and fall down due to wind or the like. That is also why unmanned aircrafts have not gained widespread use for transporting loads.

Heavier loads require bigger and heavier drive motors and propellers. Each of the battery modules also has to be electrically configured to output high current. Furthermore, the airframe of an unmanned aircraft is configured in preparation for a fall, a shake, and the like, and unfortunately weighs more.

According to an embodiment of the present disclosure, there are provided a lighter electric aircraft and power supply device.

### Solution to Problem

The invention is defined in the appended claims. There is provided an electric aircraft according to claim 1.

### Advantageous Effects of Invention

According to at least one embodiment, battery modules supply power sources to a motor control unit, resulting in less supply power. Accordingly, there is no need to provide a heavy high-power supply line, a large-scale circuit, or the like. Additionally, not only the advantageous effects described here, but any of the advantageous effects described herein may also be attained. The advantageous effects exemplified below do not also limit the present disclosure.

### Brief Description of Drawings

[FIG. 1] FIG. 1 is a plan view illustrating a configuration of an unmanned aircraft according to a first embodiment of the present disclosure.
[FIG. 2] FIG. 2 is a front view illustrating a configuration of an unmanned aircraft.
[FIG. 3] FIG. 3 is a schematic diagram used to describe an example and another example of a configuration of a battery unit.
[FIG. 4] FIG. 4 is a graph for describing an embodiment of the present disclosure.
[FIG. 5] FIG. 5 is a block diagram of the first embodiment of the present disclosure.
[FIG. 6] FIG. 6 is a block diagram illustrating a modification of the first embodiment of the present disclosure.
[FIG. 7] FIG. 7 is a block diagram of the second embodiment of the present disclosure.
[FIG. 8] FIG. 8 is a block diagram illustrating a modification of the second embodiment of the present disclosure.
[FIG. 9] FIG. 9 is a block diagram of a reference example.

### Description of Embodiments

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

The following embodiments are preferred specific examples of the present disclosure, and a variety of technically preferable limitations are put thereon. However, the scope of the present disclosure below will not be limited to those embodiments unless it is stated in particular that they limit the present disclosure.

Now, the present disclosure will be described in the following order.
<1. First Embodiment>
<2. Second Embodiment>
<3. Modification>

### <1. First Embodiment>

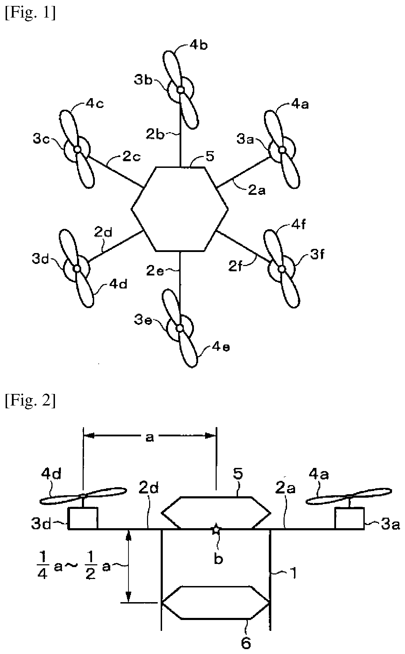

FIG. 1 is a plan view of an unmanned aircraft according to a first embodiment, and FIG. 2 is a front view of the unmanned aircraft according to the first embodiment. The airframe includes a body 1 that is shaped like a cylinder or a tube with a polygonal cross section and serves as the central part, and support shafts 2a to 2f fixed to the upper part of the body 1. As an example, the body 1 is shaped like a tube with a hexagonal cross section, and the six support shafts 2a to 2f radially extend from the center of the body 1 at equiangular intervals. The body 1 and the support shafts 2a to 2f are made of a light and strong material.

Furthermore, the airframe including the body 1 and the support shafts 2a to 2f is designed, for example, to have its components shaped and disposed in a manner that the airframe has the center of gravity positioned on the vertical line passing through the center of the support shafts 2a to 2f. A circuit unit 5 and a battery unit 6 are additionally attached in a manner that the center of gravity is positioned on the vertical line.

Six rotary wings and motors are provided in the first embodiment. The airframe may, however, include four rotary wings and motors, or eight or more rotary wings and motors.

Motors 3a to 3f are attached to the tips of the respective support shafts 2a to 2f as the drive sources of the rotary wings. Rotary wings 4a to 4f are attached to the rotating shafts of the motors 3a to 3f. The circuit unit 5 including motor control circuits that control the respective motors is attached to the central part, at which the support shafts 2a to 2f intersect and the motor control circuits include at least a processor.

Furthermore, the battery unit 6 is disposed at the lower part of the body 1 as the power source. As discussed below, the battery unit 6 includes three battery modules that supply power to the respective pairs of motors and rotary wings, the motors and rotary wings in each pair having 180-degree facing intervals. Each battery module includes, for example, a lithium-ion secondary battery and a battery control circuit that controls electric charge and discharge. That is to say, the motor 3a and the rotary wing 4a are paired with the motor 3d and the rotary wing 4d. Similarly, (motor 3b and rotary wing 4b) are paired with (motor 3e and rotary wing 4e), while (motor 3c and rotary wing 4c) are paired with (motor 3f and rotary wing 4f). The number of battery modules is equal to the number of pairs.

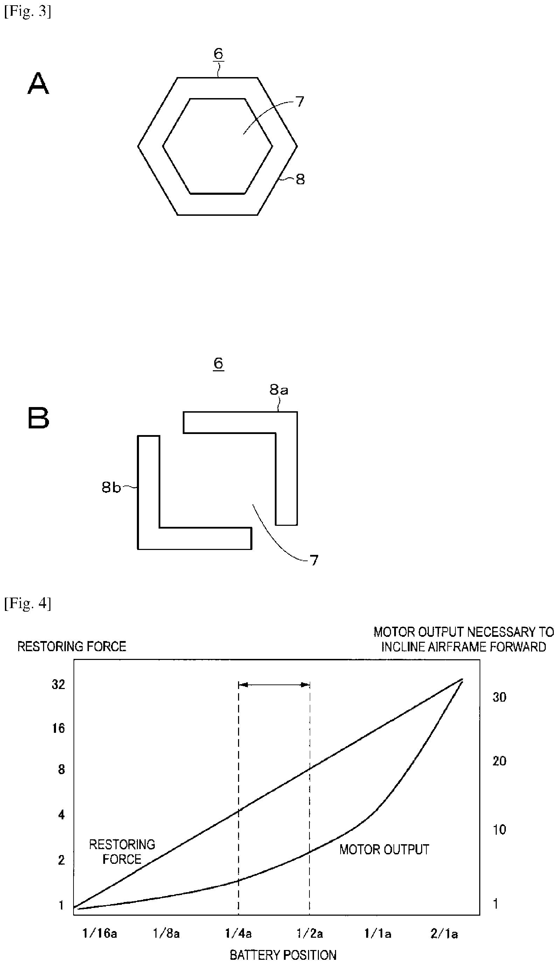

The battery unit 6 is detachably attached to the inside of the body 1. The battery unit 6 is symmetric with respect to the center of the airframe, which is the center of gravity, as illustrated in FIG. 3, and is disposed and shaped to have a central opening 7. FIG. 3A illustrates an example in which there is provided a hollow case 8 having a regular hexagonal planar shape around the central opening 7, and a battery module is stored in the case 8. As illustrated in FIG. 3B, a battery module may be stored in separate cases 8a and 8b.

If the battery unit 6 has the center of gravity agree with that of the airframe, the center of gravity is more stable. Furthermore, the battery unit 6 has the central opening 7, and thus can be less influenced by wind or the like because the wind flows through the central opening 7 during flight. This can consequently facilitate balance control, allow for a longer flight time, and further prevent the temperature of the battery unit 6 from rising.

The battery unit 6 is disposed at a lower position than the horizontal positions of the support shafts 2a to 2f as illustrated in FIG. 2. The position of the battery unit 6 is lower than the horizontal positions by a/4 to a/2. Here, a represents the distances from the central position b (intersection of the support shafts 2a to 2f) of the airframe to the rotation centers of the rotary wings 4a to 4f. This positional relationship offers restoring force from the mass of the battery unit 6. That is to say, this is because the gravity acting on the mass of the battery unit 6 applies force to keep the driveshaft level around a fulcrum b. This can also prevent the motor output necessary to control and incline the airframe from being too high.

FIG. 4 illustrates the position of the battery unit 6 on the transverse axis, while illustrating the restoring force and motor output necessary to incline the airframe forward (on the vertical axis). To make the graph concise, the restoring force is represented by a linear axis, and the motor output necessary to incline the airframe is represented by a logarithmic axis. For example, the battery unit 6 positioned at a/4 offers twofold restoring force by leverage as compared with the battery unit 6 positioned at a/ 8, and thus it is preferable to dispose a battery pack away from the fulcrum b to secure balance.

Meanwhile, the airframe has to be inclined forward to advance the unmanned aircraft. For example, if the battery unit 6 is provided at the position of a, the airframe has to be inclined forward with force against the twofold restoring force as compared with the battery unit 6 positioned at a/2. Accordingly, the motor produces higher output, unfortunately resulting in a larger battery module that supplies power to the motor. In this context, the battery unit 6 provided at (a/4 to a/2) offers a more proper balance between the restoring force of the battery unit 6 and the motor output for inclining the airframe forward.

Unmanned aircrafts generally referred to as drones each have motor control circuits control the output of motors to take a desired cruise. For example, while an unmanned aircraft is hovering or stays in the air, the unmanned aircraft detects inclination with a gyro device mounted on the airframe, increases the output of a motor on a lowered side of the airframe, and decreases the output of a motor on the lifted side of the airframe to keep the airframe level. The unmanned aircraft inclines the airframe forward in advancing by decreasing the output of a motor in the advancing direction and increasing the output of a motor in the opposite direction to generate forward thrust in the advancing direction. The battery unit 6 provided at the above-described position offers a proper balance between the stableness of the airframe and easy control in those balance control and thrust control over the unmanned aircraft.

Furthermore, a pair of motors and rotary wings at a 180-degree facing position frequently have rotation speed controlled in the inverse directions in those kinds of control. In view of this point, an embodiment of the present disclosure provides a battery module that supplies power to each pair.

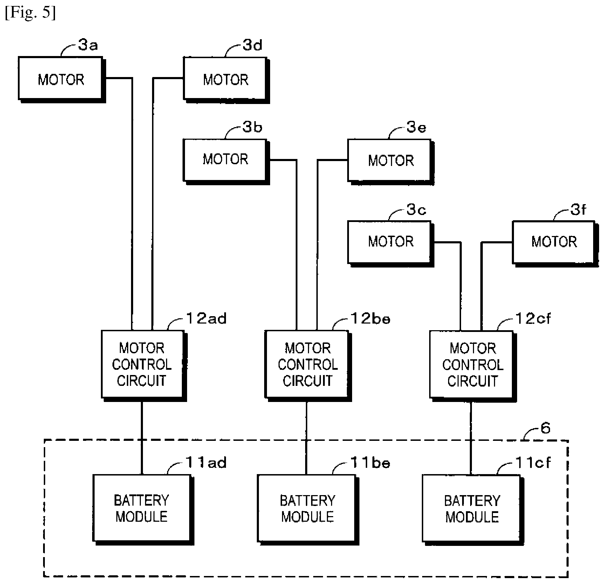

FIG. 5 illustrates a configuration example of a system according to the first embodiment of the present disclosure. The battery unit 6 includes three battery modules 11ad, 11be, and 11cf. These battery modules 11ad, 1 1be, and 11cf constitute the battery unit 6. As discussed above, the battery modules 11ad, 11be, and 11cf are shaped to have the central opening 7.

The power output from the battery module 11ad is supplied to a motor control circuit 12ad. The motors 3a and 3d are connected to the motor control circuit 12ad. The motors 3a and 3d rotate the rotary wings 4a and 4d. The power output from the battery module 11be is supplied to a motor control circuit 12be. The motors 3b and 3e are connected to the motor control circuit 12be. The motors 3b and 3e rotate the rotary wings 4b and 4e. The power output from the battery module 11cf is supplied to a motor control circuit 12cf. The motors 3f and 3f are connected to the motor control circuit 12cf. The motors 3c and 3f rotate the rotary wings 4c and 4f.

Although FIG. 5 and the following figures do not illustrate, there are provided an overall controller that controls the overall unmanned aircraft, a balance sensor that detects the balance of the unmanned aircraft, and the like which allow the unmanned aircraft, for example, to ascend, descend, advance, and move backward.

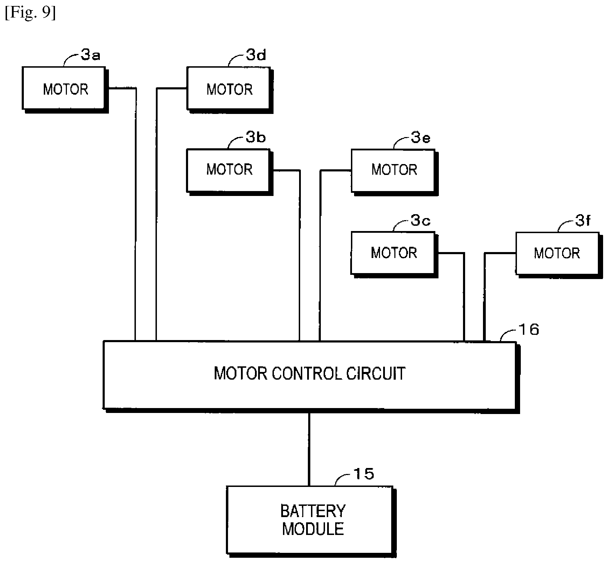

For example, the unmanned aircraft illustrated in FIG. 1 includes three facing pairs of motors, and thus includes three pairs of components including battery modules and motor control circuits, and the facing motors. FIG. 9 illustrates a reference example whose system configuration is different from that of an embodiment of the present disclosure. For example, the power output from a single battery module 15 is supplied to a motor control circuit 16, and the motor control circuit 16 distributes the power to six motors 3a to 3f. Three battery modules 15 may be connected in parallel in some cases.

The power from the battery module 15 is supplied to the six motors in the configuration according to the reference example illustrated in FIG. 9. Accordingly, the electric current supplied from the battery module 15 to the motor control circuit 16 takes a large value. Furthermore, the electric current flowing inside the motor control circuit 16 takes a large value. Cables, circuit parts, and the like supporting high current are generally large and heavy, increasing the weight of the unmanned aircraft.

According to the first embodiment of the present disclosure, it is possible to decrease the electric current supplied to the motor control circuits 12ad, 12be, and 12cf from the respective battery modules to approximately 1/3 as compared with the configuration according to the reference example. This makes it possible to set lower allowable current value for the member of a current path and a circuit part, making the system lighter. As a result, the unmanned aircraft can be made lighter.

Furthermore, as discussed above, a 180-degree facing pair of rotary wings (motors) of the unmanned aircraft are frequently controlled in the inverse directions to increase the rotation speed of one of the rotary wings while decreasing the rotation speed of the other. Thus, if a pair of motors are supplied with power from a common battery module, it is possible to average decreases in the capacities of the battery modules of respective pairs.

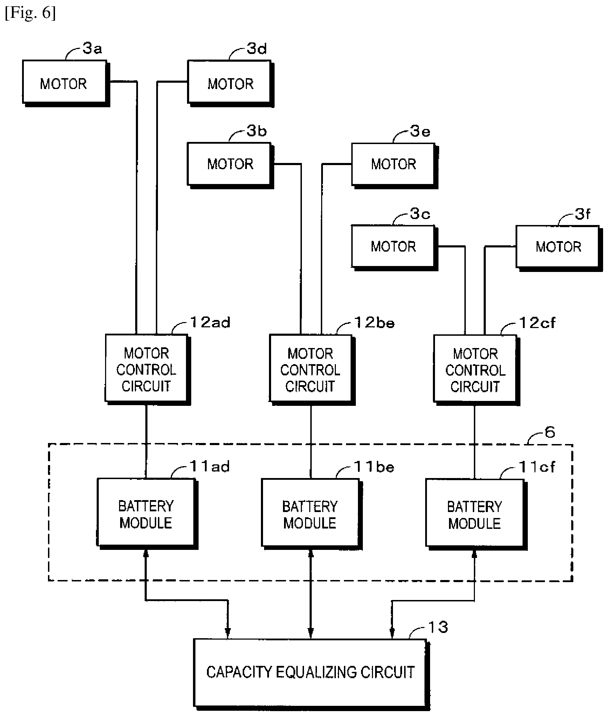

FIG. 6 illustrates a system configuration of a modification example of the first embodiment of the present disclosure. FIG. 6 is different from FIG. 5 in that there is provided a capacity equalizing circuitry 13 including a least a processor for the battery modules 11ad, 11be, and 11cf. The capacity equalizing circuitry 13 includes a circuit that monitors the voltages of the battery modules 11ad, 11be, and 11cf, and a switching element that equalizes the capacities of the battery modules 11ad, 11be, and 11cf on the basis of a relationship between the voltages. For example, even if the unmanned aircraft is designed to have the center of gravity positioned at the center of rotary wings, a loaded object having the center of gravity off from the central position imposes a heavier load on a specific motor for balance control, and the capacity of the battery module that drives the motor is extremely decreased. This results in a shorter flight time than expected. If the capacity equalizing circuitry 13 corrects the capacity, this can be overcome.

### <2. Second Embodiment>

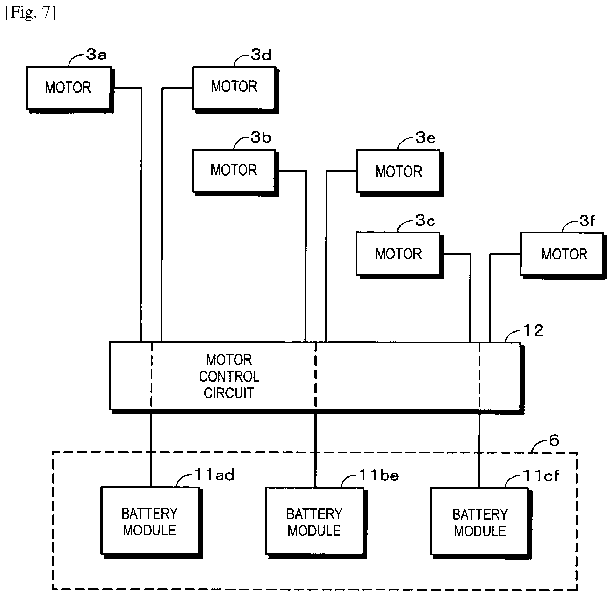

A second embodiment of the present disclosure will be described with reference to FIG. 7. The unmanned aircraft includes the six rotary wings 4a to 4f as illustrated in FIG. 1. The motor control circuits are separated for each pair in the first embodiment, but the unmanned aircraft is configured to include a single motor control circuit 12 in the second embodiment although control is performed on each pair. For example, the motor control circuit 12 shares a control microcomputer between some pairs. The motor control circuit 12 has power supply systems separated for each pair, and power is supplied from each battery module to a pair of motors through each power supply system.

Power is supplied from a common battery module to a pair of motors in the second embodiment like the first embodiment, and thus it is possible to average decreases in the capacities of the battery modules of the respective pairs.

Moreover, if the battery unit 6 has the center of gravity agree with that of the airframe, the center of gravity is more stable. Furthermore, the battery unit 6 has the central opening 7, making balance control easier and allowing for a longer flight time. Moreover, setting the battery unit 6 at a position lower than the horizontal positions of the support shafts 2a to 2f (distance from a/4 to a/2) offers a more proper balance between the restoring force of the battery unit 6 and the motor output for inclining the airframe forward.

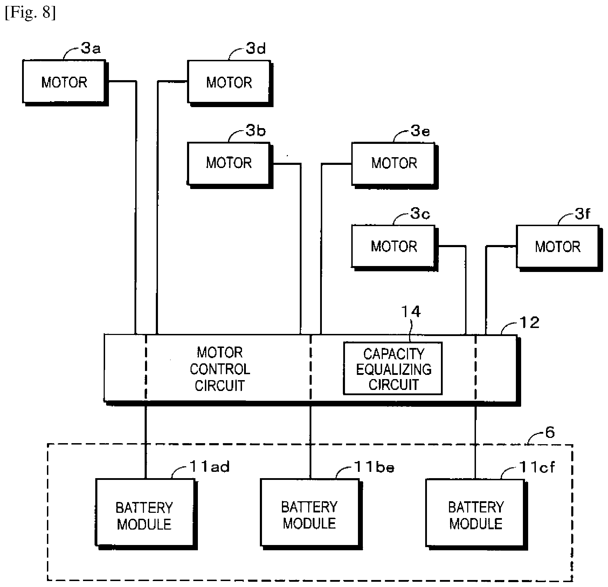

FIG. 8 illustrates a modification of the second embodiment. Like the first embodiment, the motor control circuit 12 includes the capacity equalizing circuitry 13 that prevents the capacity of a specific battery module from decreasing.

### <3. Modification>

Although the embodiments of the present disclosure have been specifically described above, the present disclosure is not limited to each of the above-described embodiments. A variety of variations are possible based on the technical ideas of an embodiment of present disclosure. For example, the present disclosure is not limited to an electric aircraft that transports a load, but can also be applied to an electric aircraft that has an image shooting device mounted thereon, an electric aircraft that sprinkles agricultural chemicals, and the like.

The configurations, methods, processes, shapes, materials, values, and the like in the above-described embodiments can be combined with each other as long as they are within the scope of the appended claims.

It should be understood by those skilled in the art that various modifications, combinations, sub-combinations and alterations may occur depending on design requirements and other factors insofar as they are within the scope of the appended claims.

### Reference Signs List

1 body
2a to 2f support shaft
3a to 3f motor
4a to 4f rotary wing
5 circuit unit
6 battery unit
7 central opening
11a to 11f battery module
12a to 12f motor control circuit

## Claims

1. An electric aircraft comprising:
an airframe including a body (1);
a battery (6);
a plurality of motors (3a, 3b, 3d, 3e), each motor coupled to a rotary wing (4a, 4b, 4d, 4e) and supported by a respective support shaft (2a, 2b, 2d, 2e), the plurality of motors being arranged in at least a first pair of motors (3a, 3d) and a second pair of motors (3b, 3e), the motors of each pair being spaced around the body (1) in a 180-degree interval; and
a first motor control circuitry (12a, 12d) configured to control the first pair of motors and a second motor control circuitry 12b, 12e) configured to control the second pair of motors;
wherein the battery includes a plurality of battery modules (1ad, 11be), and wherein the battery is configured to supply power to the first motor control circuitry via a first power line, and
wherein the battery is configured to supply power to the second motor control circuitry via a second power line, and wherein the battery is detachably attached to an inside of the body and is symmetric with respect to the center of gravity of the airframe, **characterised in that** the battery is being disposed and shaped to have a central opening (7), and wherein a total number of the battery modules is equal to a total number of the pairs of motors, wherein each of the plurality of battery modules supplies power to the respective pairs of motors.

2. The electric aircraft according to claim 1, wherein the first pair of motors includes a first motor and a second motor, and wherein the first motor control circuitry is configured to increase a rotation speed of the first motor while decrease a rotation speed of the second motor at same time.

3. The electric aircraft according to claim 2, wherein the first pair of rotary wings includes a first wing coupled with the first motor and a second wing coupled with the second motor, and the first and second wings are at a facing position.

4. The electric aircraft according to claim 1, wherein the battery is provided at a position lower than the shafts by a distance from a/4 to a/2, and wherein "a" represents a distance from a central position of the electric aircraft to a rotation center of one of a first and second wings.

5. The electric aircraft according to claim 4, wherein the battery is provided under an intersection of the shafts.

6. The electric aircraft according to claim 1, further comprising a case (8), wherein the case is configured to store the battery.

7. The electric aircraft according to claim 6, wherein the case includes at least one of a hexagonal shape and a rectangular shape.

8. The electric aircraft according to claim 1, and wherein the battery modules includes at least a lithium-ion battery and a battery control circuit.

9. The electric aircraft according to claim 1, further comprising a capacity equalizing circuitry (13), and wherein the capacity equalizing circuitry is configured to equalize capacities of the plurality of battery modules.

10. The electric aircraft according to claim 1, wherein the first motor control circuitry and the second motor control circuitry are configured to share a microcomputer.

11. The electric aircraft according to claim 1, wherein the electric aircraft includes a drone aircraft.

## Patentansprüche

1. Elektroluftfahrzeug, mit:
einem Luftrahmen mit einem Körper (1);
einer Batterie (6);
einer Mehrzahl von Motoren (3a, 3b, 3d, 3e), wobei jeder Motor mit einem Rotationsflügel (4a, 4b, 4d, 4e) gekoppelt und gestützt durch eine jeweilige Stützwelle (2a, 2b, 2d, 2e) ist, wobei die Mehrzahl von Motoren in mindestens einem ersten Paar von Motoren (3a, 3d) und einem zweiten Paar von Motoren (3b, 3e) angeordnet ist, wobei die Motoren jedes Paars über den Körper (1) in einem 180°-Intervall verteilt sind; und
einer ersten Motorsteuerungsschaltung (12a, 12d), der dazu konfiguriert ist, das erste Paar von Motoren und das erste Paar von Motoren zu steuern, und einer zweiten Motorsteuerungsschaltung (12b, 12e), der dazu konfiguriert ist, das zweite Paar von Motoren zu steuern;
wobei die Batterie eine Mehrzahl von Batteriemodulen (11ad, 11be) aufweist, und wobei die Batterie dazu konfiguriert ist, Leistung der ersten Motorsteuerungsschaltung über eine erste Leistungsleitung bereitzustellen, und
wobei die Batterie dazu konfiguriert ist, der zweiten Motorsteuerungsschaltung über eine zweite Leistungsleitung Leistung zuzuführen, und wobei die Batterie entfernbar angebracht ist an einer Innenseite des Körpers und symmetrisch in Bezug auf den Schwerpunkt des Luftrahmens ist,
**dadurch gekennzeichnet, dass** die Batterie angeordnet und geformt ist, eine Zentralöffnung (7) aufzuweisen, wobei eine Gesamtzahl der Batteriemodule gleich zu einer Gesamtzahl der Paare von Motoren ist, wobei jedes der Mehrzahl von Batteriemodulen Leistung zu dem jeweiligen Paar von Motoren zuführt.

2. Elektroluftfahrzeug nach Anspruch 1, wobei das erste Paar von Motoren einen ersten Motor und einen zweiten Motor aufweist, und wobei die erste Motorsteuerungsschaltung dazu konfiguriert ist, eine Rotationsgeschwindigkeit des ersten Motors zu erhöhen, während eine Rotationsgeschwindigkeit des zweiten Motors zu derselben Zeit verringert wird.

3. Elektroluftfahrzeug nach Anspruch 2, wobei das erste Paar von Rotationsflügen einen ersten Flügel aufweist, der mit dem ersten Motor gekoppelt ist, und einen zweiten Flügel aufweist, der mit dem zweiten Motor gekoppelt ist, und wobei der erste und der zweite Flügel einander gegenüberliegen.

4. Elektroluftfahrzeug nach Anspruch 1, wobei die Batterie bereitgestellt ist an einer Position niedriger als die Welle um eine Entfernung von a/4 bis a/2, und wobei "a" eine Entfernung von einer Zentralposition des Elektroluftfahrzeugs zu einer Rotationsmitte von einem von dem ersten und dem zweiten Flügel repräsentiert.

5. Elektroluftfahrzeug nach Anspruch 4, wobei die Batterie unter einem Schnittpunkt der Wellen bereitgestellt ist.

6. Elektroluftfahrzeug nach Anspruch 1, des Weiteren mit einem Gehäuse (8), wobei das Gehäuse dazu konfiguriert ist, die Batterie aufzunehmen.

7. Elektroluftfahrzeug nach Anspruch 6, wobei das Gehäuse zumindest eines von einer hexagonalen Form und einer rechteckigen Form aufweist.

8. Elektroluftfahrzeug nach Anspruch 1, und wobei die Batteriemodule zumindest eine Lithiumionenbatterie und eine Batteriesteuerungsschaltung aufweisen.

9. Elektroluftfahrzeug nach Anspruch 1, des Weiteren mit einer Kapazitätsausgleichsschaltung (13), und wobei die Kapazitätsausgleichsschaltung dazu konfiguriert ist, Kapazitäten der Mehrzahl von Batteriemodulen auszugleichen.

10. Elektroluftfahrzeug nach Anspruch 1, wobei die erste Motorsteuerungsschaltung und die zweite Motorsteuerungsschaltung dazu konfiguriert sind, einen Mikrocomputer zu teilen.

11. Elektroluftfahrzeug nach Anspruch 1, wobei das Elektroluftfahrzeug ein Drohnenluftfahrzeug aufweist.

## Revendications

1. Aéronef électrique, comprenant :
une cellule comportant un corps (1) ;
une batterie (6) ;
une pluralité de moteurs (3a, 3b, 3d, 3e), chaque moteur étant accouplé à une aile rotative (4a, 4b, 4d, 4e) et porté par un arbre porteur respectif (2a, 2b, 2d, 2e), la pluralité de moteurs étant agencés en au moins une première paire de moteurs (3a, 3d) et une deuxième paire de moteurs (3b, 3e), les moteurs de chaque paire étant espacés autour du corps (1) à un intervalle de 180 degrés ; et
une première circuiterie de commande (12a, 12d) de moteurs configurée pour commander la première paire de moteurs et une deuxième circuiterie de commande (12b, 12e) de moteurs configurée pour commander la deuxième paire de moteurs ;
la batterie comportant une pluralité de modules (11ad, 11be) de batterie, et
la batterie étant configurée pour alimenter électriquement la première circuiterie de commande de moteurs par le biais d'une première ligne électrique, et
la batterie étant configurée pour alimenter électriquement la deuxième circuiterie de commande de moteurs par le biais d'une deuxième ligne électrique,
et la batterie étant attachée de façon détachable à un intérieur du corps et étant symétrique par rapport au centre de gravité de la cellule,
**caractérisé en ce que** la batterie est placée et mise en forme de façon à présenter une ouverture centrale (7), et
un nombre total des modules de batterie étant égal à un nombre total des paires de moteurs, chacun de la pluralité de modules de batterie alimentant électriquement les paires respectives de moteurs.

2. Aéronef électrique selon la revendication 1, dans lequel la première paire de moteurs comporte un premier moteur et un deuxième moteur, et dans lequel la première circuiterie de commande de moteurs est configurée pour augmenter une vitesse de rotation du premier moteur en réduisant simultanément une vitesse de rotation du deuxième moteur.

3. Aéronef électrique selon la revendication 2, dans lequel la première paire d'ailes rotatives comporte une première aile accouplée au premier moteur et une deuxième aile accouplée au deuxième moteur, et les première et deuxième ailes sont placées en regard l'une de l'autre.

4. Aéronef électrique selon la revendication 1, dans lequel la batterie occupe une position plus basse que les arbres d'une distance comprise entre a/4 et a/2, et dans lequel "a" représente une distance allant d'une position centrale de l'aéronef électrique à un centre de rotation d'une parmi une première et une deuxième aile.

5. Aéronef électrique selon la revendication 4, dans lequel la batterie est placée sous une intersection des arbres.

6. Aéronef électrique selon la revendication 1, comprenant en outre un boîtier (8), le boîtier étant configuré pour entreposer la batterie.

7. Aéronef électrique selon la revendication 6, dans lequel le boîtier comporte une forme hexagonale et/ou une forme rectangulaire.

8. Aéronef électrique selon la revendication 1, et dans lequel les modules de batterie comportent au moins une batterie lithium-ion et un circuit de commande de batterie.

9. Aéronef électrique selon la revendication 1, comprenant en outre une circuiterie d'égalisation de capacités (13), et dans lequel la circuiterie d'égalisation de capacités est configurée pour égaliser des capacités de la pluralité de modules de batterie.

10. Aéronef électrique selon la revendication 1, dans lequel la première circuiterie de commande de moteurs et la deuxième circuiterie de commande de moteurs sont configurées pour partager un microcalculateur.

11. Aéronef électrique selon la revendication 1, lequel aéronef électrique comporte un aéronef drone.
